(19) Europäisches Patentamt
European Patent Office
Office européen des brevets

(11) EP 3 469 022 B1

(12) EUROPEAN PATENT SPECIFICATION

(45) Date of publication and mention of the grant of the patent:
**23.09.2020 Bulletin 2020/39**

(21) Application number: **17732241.9**

(22) Date of filing: **08.06.2017**

(51) Int Cl.:
***C08L 23/22*** *(2006.01)* ***B60C 11/13*** *(2006.01)*

(86) International application number:
**PCT/JP2017/021241**

(87) International publication number:
**WO 2017/213204 (14.12.2017 Gazette 2017/50)**

(54) **A TIRE COMPRISING A TREAD**

REIFEN MIT EINER LAUFFLÄCHE

PNEUMATIQUE COMPRENANT UNE BANDE DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2016 PCT/JP2016/002802**

(43) Date of publication of application:
**17.04.2019 Bulletin 2019/16**

(73) Proprietor: **Compagnie Générale des Etablissements Michelin**
**63000 Clermont-Ferrand (FR)**

(72) Inventor: **MORIYAMA Masahiko**
**Tokyo 163-1073 (JP)**

(74) Representative: **Regimbeau**
**20, rue de Chazelles**
**75847 Paris Cedex 17 (FR)**

(56) References cited:
**US-A1- 2007 062 623**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 469 022 B1

## Description

### Technical Field

The field of the present invention is that of tires having treads suitable for snow tires or winter tires capable of rolling over ground surfaces covered with snow.

As is known, the snow tires classified in a category of use "snow", identified by an inscription the Alpine symbol ("3-peak-mountain with snowflake), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

### Background Art

In order to obtain satisfactory driving performance particularly on wet, snow-covered or icy road surfaces, it is a known practice to provide a tire comprising a tread that comprises tread pattern elements delimited by cut-outs (grooves with an average width of greater than or equal to 2 mm and/or sipes (incisions), with an average width of less than 2 mm), these cut-outs being obtained for example by molding. The tread pattern elements comprise a contact surface intended to come into contact with the ground during rolling, lateral faces and delimiting cut-outs (especially, sipes); each intersection of each lateral face with the contact surface forms an edge corner which facilitates contact between the tire and the ground.

There are generally two types of the tread pattern elements. One is called as "block(s)" delimited by circumferential or axial groove(s), and the axial groove(s) is open to both sides of the circumferential grooves. Another is called as "rib(s)" delimited by circumferential groove(s) (optionally, and axial one(s)), and the axial groove(s) is not open to both sides of the circumferential grooves. Moreover, the tread pattern elements may comprise one or more sipes to form additional edge corners.

### Citation List

### Patent Literature

PTL 1: WO2013/087878

Generally, it is well known that rubber compositions of the tread, especially the edge corner(s), of the tire has a significant effect on tire grip performance on ground, particularly wet, snowy or icy. Thus, the patent application (Patent literature 1) filed by the present applicants, discloses a winter type tire particularly well suited to travel on snow-covered road, and the tread pattern elements respectively comprising at least one lateral face and a contact surface intended to come into contact with the ground during rolling, wherein the tread pattern elements comprise a base rubber composition (a first rubber composition (FC)) at least partially covered on at least one of the lateral face(s) with a layer of a covering composition (a second rubber composition (SC)) which is different from the first rubber composition and which comprises a specific formulation (for instance, a composition having a high glass transition temperature, or comprising high filler content or comprising high sulphur content) able to give such very rigid covering layer after vulcanization of the tire, and these tread pattern elements placed are favorable the grip on snow-covered ground.

However, it is always desirable for the skilled person to improve grip on wet ground, in particular in a low temperature condition.

### Summary of Invention

### Technical Problem

Now, during their research, the inventors have discovered that a specific covering composition makes it possible to unexpectedly and substantially improve the grip on wet ground on low wet temperature condition(s).

### Solution to Problem

The covering composition is based on more than 50 phr up to 100 phr of butyl rubber, more than 60 phr of a reinforcing inorganic filler, and a plasticizing agent comprising more than 25 phr of a hydrocarbon resin having a glass transition temperature ($Tg_{DSC}$) of more than 20°C, and comprising no liquid plasticizer or comprising at most 5 phr of a liquid plasticizer.

**Advantageous Effects of Invention**

The covering composition makes it possible to improve the grip performance of the tire on wet ground at low temperature(s) (for instance, around +8 °C) as well as high one(s) (for instance, around +23°C).
As a tire has a geometry of revolution about an axis of rotation, the geometry of the tire is generally described in a meridian plane containing the axis of rotation of the tire, and the following definitions of directions of the tire are understood in the present application:

- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.
In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element. Expression "laterally" mean "in the circumferential or axial direction".
Moreover, any interval of values denoted by the expression "between a and b" represents the range of values of greater than "a" and of less than "b" (i.e. the limits a and b excluded) Whereas any interval of values denoted by the expression "from a to b" means the range of values going from "a" to "b" (i.e. including the strict limits a and b). The abbreviation "phr" signifies parts by weight per hundred parts of elastomer or rubber (of the total of the elastomers if several elastomers are present). The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).
In the present description, unless expressly indicated otherwise, each $Tg_{DSC}$ (glass transition temperature) is measured in a known way by DSC (Differential Scanning Calorimetry) according to Standard ASTM D3418-08.
A first aspect of the present invention is a tire comprising a tread which comprises a plurality of tread pattern elements (1) delimited by cut-outs (3, 4);
the tread pattern elements (1) respectively comprising at least one lateral face (13, 14, 15, 16) and a contact surface (2) intended to come into contact with the ground during rolling;
the tread pattern elements (1) respectively comprising a first rubber composition (FC) at least partially covered on at least one of the lateral face(s) with a layer of a second rubber composition (SC) which is different from the first rubber composition (FC), the tire, being characterized in that the second rubber composition (SC) is based on:

- more than 50 phr, preferably more than 60 phr, and up to 100 phr of a butyl rubber;
- no the other diene elastomer or less than 50 phr, preferably less than 40 phr (that is, optionally, based on 0 phr to less than 50 phr, preferably less than 40 phr) of another diene elastomer which is different from the butyl rubber;
- a reinforcing filler comprising more than 60 phr of a reinforcing inorganic filler; and
- a plasticizing agent comprising more than 25 phr of a hydrocarbon resin having a glass transition temperature ($Tg_{DSC}$) of more than 20°C, and comprising no liquid plasticizer or comprising at most 5 phr of a liquid plasticizer.

The first rubber composition (FC) is a rubber composition of a base rubber material of the tread pattern elements (1). The second rubber composition (SC) is the above novel and specific covering composition.
A second aspect of the present invention is the tire according to the first aspect, wherein the second rubber composition (SC) is based on 70 to 100 phr, preferably 80 to 100 phr, more preferably 90 to 100 phr, of the butyl rubber.
A third aspect of the present invention is the tire according to the first aspect or the second one, wherein the butyl rubber is a halogenated butyl rubber, preferably a brominated butyl rubber.
A fourth aspect of the present invention is the tire according to the first to the third aspects, wherein the other diene elastomer, that is, the optional other diene elastomer, is selected from the group consisting of natural rubber, synthetic polyisoprenes, polybutadienes, butadiene copolymers, isoprene copolymers and the mixtures thereof.
A fifth aspect of the present invention is the tire according to the fourth aspect, wherein the other diene elastomer is selected from the group consisting of polybutadienes, butadiene copolymers, isoprene copolymers and the mixtures

thereof.

A sixth aspect of the present invention is the tire according to the fourth aspect, wherein the other diene elastomer is selected from the group consisting of natural rubber, synthetic polyisoprenes and the mixtures thereof.

A seventh aspect of the present invention is the tire according to the first to the sixth aspects, wherein the reinforcing filler comprises between 80 and 160 phr, preferably between 100 and 150 phr, more preferably from 110 to 140 phr of the reinforcing inorganic filler.

An eighth aspect of the present invention is the tire according to the first to the seventh aspects, wherein the reinforcing inorganic filler comprises from 50 to 100% of silica by weight of the reinforcing inorganic filler, preferably from 80 to 100%.

A ninth aspect of the present invention is the tire according to the eighth aspect, wherein the reinforcing inorganic filler comprises 100% of silica by weight of the reinforcing inorganic filler.

A tenth aspect of the present invention is the tire according to the first to the ninth aspects, wherein the reinforcing filler comprises less than 20 phr, preferably between 0.5 and 20 phr, more preferably between 2 and 10 phr, of carbon black.

An eleventh aspect of the present invention is the tire according to the first to the tenth aspects, wherein the second rubber composition (SC) is based on more than 40 phr, preferably between 40 and 120 phr, more preferably between 45 and 100 phr, of the plasticizing agent.

A twelfth aspect of the present invention is the tire according to the eleventh aspect, wherein the second rubber composition (SC) is based on more than 50 phr, preferably between 50 and 120 phr, more preferably from 55 to 100 phr, of the plasticizing agent.

A thirteenth aspect of the present invention is the tire according to the first to the twelfth aspects, wherein the plasticizing agent comprises between 25 and 100 phr, preferably between 30 and 80 phr, more preferably from 35 to 75 phr of the hydrocarbon resin.

A fourteenth aspect of the present invention is the tire according to the first to the thirteenth aspects, wherein the hydrocarbon resin has the glass transition temperature of more than 30°C, preferably more than 35°C, more preferably at least 40°C, still more preferably at least 50°C.

A fifteenth aspect of the present invention is the tire according to the first to the fourteenth aspects, wherein the hydrocarbon resin is selected from the group consisting of cyclopentadiene homopolymer or copolymer resins, dicyclopentadiene homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins, and the mixtures thereof.

A sixteenth aspect of the present invention is the tire according to the first to the fifteenth aspects, wherein the plasticizing agent comprises no liquid plasticizer or comprises at most 5 phr (that is comprises 0 to 5 phr) of the liquid plasticizer.

An eighteenth aspect of the present invention is the tire according to the sixteenth aspect, wherein the plasticizing agent is devoid of the liquid plasticizer.

A ineteenth aspect of the present invention is the tire according to the first to the eighteenth aspects, wherein the layer of the second rubber composition (SC) has a thickness (E1) which is more than 0.1mm, preferably more than 0.2 mm, more preferably between 0.2 and 4.0 mm, still more preferably between 0.3 and 1.0 mm.

The tire(s) of the invention are particularly intended to be equipped to passenger motor vehicles, including 4×4 (four-wheel drive) vehicles and SUV (Sport Utility Vehicles) vehicles, and also industrial vehicles in particular selected from vans and heavy duty vehicles (for example, bus or heavy road transport vehicles (lorries, tractors, trailers)).

Each of the above aspects including each of the preferred range(s) and/or matter(s) may be applied to any one of the other aspects or the embodiments of the present invention.

## Brief Description of Drawings

Other characteristics and advantages of the present invention arise from the description made hereafter in reference to the annexed drawings which schematically show (in particular not to a specific scale), as nonrestrictive examples, of the embodiments of the object of the present invention.

In these drawings:

[fig.1]FIG. 1 depicts a partial plan view of blocks as tread pattern elements (1) of a tread of a tire according to the present invention;
[fig.2]FIG. 2 shows the blocks of FIG. 1 in the cross section on the line of section II-II;
[fig.3]FIG. 3 shows a plan view of a test specimen (30) for a dynamic friction coefficient measurement on wet.
[fig.4]FIG. 4 shows the test specimen of FIG. 3, in side view.

**Description of Embodiments**

The annexed FIG. 1 represents a partial plan view of four rectangular blocks as a plurality of tread pattern elements (1) of a tread of a tire according to the present invention. Each of the blocks is delimited by cut-outs (3, 4). The cut-outs are grooves (3) circumferentially extending and the other grooves (4) axially extending. Each of the blocks comprises four lateral faces (13, 14, 15, 16) and a contact surface (2) intended to come into contact with ground during the tire rolling. Each of the blocks has a length (L1) on a circumferential direction of the tire, and a width (L2) on an axial direction of the tire. Intersections of the lateral faces (13, 14, 15, 16) with the contact surface (2) form four edge corners (23, 24, 25, 26) which play important portions when driving particularly on a slippery road surface, notably through the presence of water, snow or ice.

The FIG. 2 presents the two blocks in the cross section taken along the line of section II-II of FIG. 1. The cross section is perpendicular to the axial direction of the tire.

In these figures, each of the blocks comprises a first rubber composition (FC: a mixture of base material), completely in this case, covered with a layer of a second rubber composition (SC: a mixture of covering material or a covering composition) on the four lateral faces (13, 14, 15, 16) bounding the grooves (3, 4) circumferentially (3) or axially extending (3, 4). The second rubber composition (SC) is different from the first rubber composition (FC). The layer of the second rubber composition (SC) has a thickness (E1) that is substantially constant (over an entire height (Hr) of covering, in this instance equal to a depth (H) of the grooves). Then, the depth (H) of the grooves is equal to a height of the blocks.

According to a preferred embodiment of the present invention, the lateral faces (14, 16) have orientations which are perpendicular to the circumferential direction of the tire, preferably the layer of the second rubber composition (SC) covers on the lateral faces (14, 16) which have orientations which are perpendicular to the circumferential direction of the tire in order to improve a grip on wet, snow-covered or icy ground(s).

According to a preferred embodiment of the present invention, the second rubber composition extends, in a new condition of the tire, as far as the edge corners (23, 24, 25, 26) formed by a boundary between the contact surface (2) and the lateral faces (13, 14, 15, 16) of the tread pattern elements (1).

According to a preferred embodiment of the present invention, the thickness (E1) is greater than 0.1 mm, preferably greater than 0.2 mm, more preferably between 0.2 mm and 4.0 mm. For the tires intended to be equipped to passenger motor vehicles, El is particularly between 0.3 mm and 1.0 mm.

The first rubber composition (FC) can be a conventional rubber composition which is preferably based on at least one diene elastomer (typically 50 to 100 phr of a diene elastomer selected from the group consisting of natural rubber, synthetic polyisoprenes, polybutadienes, butadiene copolymers, isoprene copolymers and the mixtures thereof), between 50 and 200 phr of a reinforcing filler (for instance, silica and/or carbon black), more than 30 phr of a plasticizing agent (for instance, liquid plasticizer(s) and/or hydrocarbon resin(s)) and a crosslinking system (not counting other usual additives).

The second rubber composition (SC) is different from the first rubber composition (FC), and is a specific rubber composition which will be described in details below.

"Diene" elastomer or rubber should be understood as meaning an elastomer resulting at least in part (i.e., a homopolymer or a copolymer) from diene monomers (monomers carrying two carbon-carbon double bonds which may or may not be conjugated).

Diene elastomers can be classified in a known way into two categories: those "essentially unsaturated" and those "essentially saturated". Butyl rubbers, such as, for example copolymers of dienes and of $\alpha$-olefins of EPDM type, come within the category of essentially saturated diene elastomers, having a content of units of diene origin which is low or very low, always less than 15% (mol%). In contrast, essentially unsaturated diene elastomer is understood to mean a diene elastomer resulting at least in part from conjugated diene monomers, having a content of units of diene origin (conjugated dienes) which is greater than 15% (mol%). In the category of "essentially unsaturated" diene elastomers, "highly unsaturated" diene elastomer is understood to mean in particular a diene elastomer having a content of units of diene origin (conjugated dienes) which is greater than 50%.

The second rubber composition (SC) according to the present invention has an essential of being based on more than 50 phr and up to 100 phr of a butyl rubber as a first diene elastomer, and no the other diene elastomer or less than 50 phr (that is, optionally based on 0 phr to less than 50 phr) of another diene elastomer as a second diene elastomer that is different from the butyl rubber.

"Butyl rubber" is understood in known manner to mean a copolymer of isobutylene and isoprene (abbreviated to IIR), and also the halogenated, preferably chlorinated (CIIR) or brominated (BIIR), versions of this type of copolymer. The butyl rubber is preferably a halogenated butyl rubber, more preferably a brominated butyl rubber.

According to a preferred embodiment of the present invention, the other diene elastomer is selected from the group consisting of natural rubber (NR), synthetic polyisoprenes (IR), polybutadienes (BR), butadiene copolymers, isoprene copolymers and the mixtures thereof.

According to a preferred embodiment of the present invention, the other diene elastomer is selected from the group consisting of polybutadienes, butadiene copolymers, isoprene copolymers and the mixtures thereof.

The butadiene copolymers are more particularly selected from the group consisting of butadiene-styrene copolymer (SBR), isoprene-butadiene copolymer (BIR), isoprene-butadiene-styrene copolymer (SBIR) and the mixtures thereof. The butadiene-styrene copolymer (SBR) preferably bears at least one (i.e., one or more) SiOR function (and also amine function), R being hydrogen or hydrocarbon radical, as described in applications WO 2012/069565, WO 2015/185394 and WO 2015/185395. Among these isoprene copolymers, mention will be also made of isoprene-styrene copolymer (SIR).

According to a preferred embodiment of the present invention, the other diene elastomer is selected from the group consisting of natural rubber, synthetic polyisoprenes and the mixtures thereof, preferably the synthetic polyisoprenes is cis-1,4-type synthetic polyisoprenes; among these synthetic polyisoprenes, use is more preferably made of polyisoprenes having a content (mol%) of cis-1,4 bonds of greater than 90%, still more preferably of greater than 98%.

The second rubber composition (SC) is based on preferably 70 to 100 phr, more preferably 80 to 100 phr, still more preferably 90 to 100 phr, of the butyl rubber, and no the other diene elastomer or preferably at most 30 phr, more preferably at most 20 phr, still more preferably at most 10 phr (that is, optionally based on preferably 0 to 30 phr, more preferably 0 to 20 phr, still more preferably 0 to 10 phr) of the other diene elastomer which is the second diene elastomer particularly selected from the group consisting of natural rubber (NR), synthetic polyisoprenes (IR), polybutadienes (BR), butadiene copolymers, isoprene copolymers and the mixtures thereof.

According to a preferred embodiment of the present invention, the second rubber composition (SC) is based on 100 phr of the butyl rubber.

The second rubber composition (SC) according to the present invention has an essential feature of being based on a reinforcing filler that comprises more than 60 phr of a reinforcing inorganic filler.

The expression "reinforcing inorganic filler" should be understood here to mean any inorganic or mineral filler, whatever its color and its origin (natural or synthetic), also referred to as "white filler" , "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous and/or aluminous fillers is described hereafter.

Mineral fillers of the siliceous type, preferably silica ($SiO_2$) or the aluminous type, preferably alumina ($Al_2O_3$) are suitable in particular as the reinforcing inorganic fillers. The silica used may be any reinforcing silica known to a person skilled in the art, in particular any precipitated or pyrogenic silica having a BET surface area and a CTAB specific surface area that are both less than 450 $m^2/g$, preferably from 20 to 400 $m^2/g$. Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in application WO 03/16387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with hexamethyldiasilazene or "CAB-O-SIL TS-622" covered with dimethyldichlorosilane from Cabot.

The reinforcing inorganic filler used, particularly in case of that it is silica, has a BET surface that is preferably between 20 and 400 $m^2/g$, more preferably between 60 and 300 $m^2/g$.

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in Patent applications WO 96/37547 and WO 99/28380.

Preferably, the second rubber composition (SC) is based on the reinforcing filler that comprises between 60 and 200 phr, more preferably between 80 and 160 phr, still more preferably between 100 and 150 phr, particularly from 110 to 140 phr, of the reinforcing inorganic filler.

According to a preferred embodiment of the present invention, the second rubber composition (SC) is based on the reinforcing filler that comprises the reinforcing inorganic filler that comprises from 50 to 100%, preferably from 80 to 100%, more preferably 100%, of silica by weight of the reinforcing inorganic filler.

According to a preferred embodiment of the present invention, the reinforcing filler of the second rubber composition (SC) may be based on less than 20 phr, preferably between 0.5 and 20 phr, more preferably between 2 and 10 phr, of carbon black. Within the ranges indicated, there is a benefit of coloring properties (black pigmentation agent) and anti-UV properties of carbon blacks, without furthermore adversely affecting the typical performance provided by the reinforcing inorganic filler, namely low hysteresis (reduced rolling resistance) and high grip on wet, snow-covered or icy ground.

In order to couple the reinforcing inorganic filler to the diene elastomer, use can be made, in a known manner, of a coupling agent (or bonding agent) intended to provide a satisfactory connection, of chemical and/or physical nature, between the reinforcing inorganic filler (surface of its particles) and the diene elastomer. This coupling agent is at least bifunctional. Use can be made in particular of at least bifunctional organosilanes or polyorganosiloxanes.

Use can be made in particular of silane polysulphides, referred to as "symmetrical" or "asymmetrical" depending on their particular structure, as described, for example, in applications WO 03/002648, WO 03/002649 and WO2004/033548.

Particularly suitable silane polysulphides correspond to the following general formula (I):

(I) Z - A - Sx - A - Z ,

in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

[Chem.1]

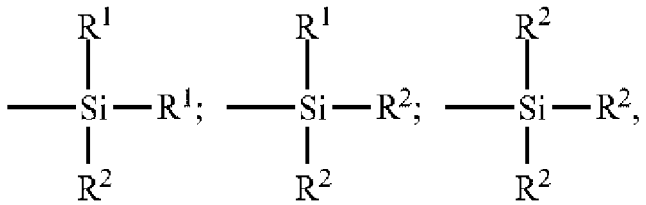

in which:

- the $R^1$ radicals which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups,
  more particularly methyl and/or ethyl),
- the $R^2$ radicals which are unsubstituted or substituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably a group selected from $C_1$-$C_4$ alkoxyls, in particular methoxyl and ethoxyl), are suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the present invention can also advantageously be carried out, for example, with alkoxysilane disulphides (x = 2).

Mention will more particularly be made, as examples of silane polysulphides, of bis(($C_1$-$C_4$)alkoxyl($C_1$-$C_4$)alkylsilyl($C_1$-$C_4$)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of bis(3-triethoxysilylpropyl)tetrasulphide, abbreviated to TESPT, of formula $[(C_2H_5O)_3Si(CH2)_3S_2]_2$, or bis(3-triethoxysilylpropyl)disulphide, abbreviated to TESPD, of formula $[(C_2HSO)_3\ Si(CH_2)_3S]_2$. Mention will also be made, as preferred examples, of bis(mono($C_1$-$C_4$ )alkoxyldi($C_1$-$C_4$)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides ($R^2$ = OH in the above formula (I)), such as described in patent applications WO 02/30939 (or US 6 774 255) and WO 02/31041 (or US 2004/051210), or of silanes or POSs carrying

azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to a preferred embodiment of the present invention, the second rubber composition (SC) is based on between 2 and 20 phr, preferably between 3 and 15 phr of coupling agent(s).

The second rubber composition (SC) according to the present invention has an essential feature of being based on a plasticizing agent comprising more than 25 phr of a hydrocarbon resin having a glass transition temperature of more than 20°C, preferably, more than 30°C, more preferably more than 40°C, still more preferably at least 50°C as described for example in applications WO 2005/087859, WO 2006/061064 or WO 2007/017060.

In a manner known to a person skilled in the art, the designation "resin" is reserved in the present application, by definition, for a compound which is solid at ambient temperature (20°C under atmosphere pressure), in contrast to a liquid plasticizing compound, such as an oil.

The hydrocarbon resin(s) are polymer well known by a person skilled in the art, which are essentially based on carbon and hydrogen, and thus miscible by nature in diene elastomer composition(s). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:

- a $Tg_{DSC}$ of greater than 20°C (for example, between 20°C and 100°C, preferably between 30°C and 100°C, more preferably between 40°C and 100°C, still more preferably at least 50°C and less than 100°C);
- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45 μm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

According to a particularly preferred embodiment, the hydrocarbon resins as being "plasticizing" are selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixtures thereof. Use is more preferably made, among the above copolymer resins, of those selected from the group consisting of (D)CPD/ vinylaromatic copolymer resins, (D)CPD/terpene copolymer resins, (D)CPD/$C_5$ fraction copolymer resins, (D)CPD/$C_9$ fraction copolymer resins, terpene/vinylaromatic copolymer resins, terpene/phenol copolymer resins, $C_5$ fraction/vinyl-aromatic copolymer resins, $C_9$ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

The preferred resins above are well known to a person skilled in the art and are commercially available, for example:

- polylimonene resins: by DRT under the name "Dercolyte L120" (Mn=625 g/mol; Mw=1010 g/mol; PI=1.6; $Tg_{DSC}$=72°C) or by Arizona Chemical Company under the name "Sylvagum TR7125C" (Mn=630 g/mol; Mw=950 g/mol; PI=1.5; $Tg_{DSC}$=70°C);
- $C_5$ fraction/vinylaromatic, notably $C_5$ fraction/styrene or $C_5$ fraction/$C_9$ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";
- limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified$\alpha$-methylstirene resins. It should be remembered that, in order to characterize these phenol-modified resins, use is made, in a known way, of a number referred to as "hydroxyl number" (measured according to Standard ISO 4326 and expressed in mg KOH/g). $\alpha$-Methylstirene resins, in particular those modified with phenol, are well known to a person skilled in the art and are available commercially, for example sold by Arizona Chemical Company under the names "Sylvares SA 100" (Mn=660 g/mol; PI=1.5; $Tg_{DSC}$=53°C); "Sylvares SA 120" (Mn=1030 g/mol; PI=1.9; $Tg_{DSC}$=64°C); "Sylvares 540" (Mn=620 g/mol; PI=1.3; $Tg_{DSC}$=36°C; hydroxyl number=56 mg KOH/ g); and "Sylvares 600" (Mn=850 g/mol; PI=1.4; $Tg_{DSC}$=50°C; hydroxyl number=31 mg KOH/g).

Preferably, the plasticizing agent of the second rubber composition (SC) is based on a total content of more than 40 phr, more preferably between 40 and 120 phr, still more preferably between 45 and 100 phr, of plasticizer(s).

According to a preferred embodiment of the present invention, the total content of plasticizer(s) is more than 50 phr, preferably between 50 and 120 phr, more preferably from 55 to 100 phr.

Advantageously, the plasticizing agent comprises between 25 and 100 phr, more advantageously between 30 and 80 phr, still more advantageously from 35 to 75 phr, of the hydrocarbon resin.

The second rubber composition (SC) according to the present invention has an essential feature of being based on a plasticizing agent comprising no liquid plasticizer or comprising at most 5 phr (that is comprises 0 to 5 phr), of the liquid plasticizer.

The liquid plasticizer(s) are liquid at 20°C (under atmospheric pressure) by definition, their role is to soften the matrix by diluting the elastomer and the reinforcing filler; their $Tg_{DSC}$ is by definition less than -20°C, preferably less than -40°C.

Any extending oil, whether of aromatic or non-aromatic nature, any liquid plasticizing agent known for its plasticizing properties with regard to diene elastomers, can be used. At ambient temperature (20°C), these plasticizers or these oils, which are more or less viscous, are liquids (that is to say, as a reminder, substances that have the ability to eventually take on the shape of their container), as opposed, in particular, to plasticizing hydrocarbon resins which are by nature solid at ambient temperature.

The liquid plasticizers selected from the group consisting of polyolefinic oils, naphthenic oils (low or high viscosity, in particular hydrogenated or otherwise), paraffinic oils, DAE (Distillate Aromatic Extracts) oils, MES (Medium Extracted Solvates) oils, TDAE oils (Treated Distillate Aromatic Extracts), RAE oils (Residual Aromatic Extracts), TRAE oils (Treated Residual Aromatic Extracts), SRAE oils (Safety Residual Aromatic Extracts), mineral oils, vegetable oils, ether plasticizers, ester plasticizers, phosphate plasticizers, sulphonate plasticizers and the mixtures thereof are suitable. The liquid plasticizer selected from the group consisting of MES oils, TDAE oils, naphthenic oils, vegetable oils and the mixtures thereof are more suitable.

Mention may be made, as phosphate plasticizers for example, of those that contain between 12 and 30 carbon atoms, for example trioctyl phosphate. As examples of ester plasticizers, mention may especially be made of the compounds selected from the group consisting of trimellitates, pyromellitates, phthalates, 1,2-cyclohexane dicarboxylates, adipates, azelates, sebacates, triesters of glycerol, and mixtures thereof. Among the above triesters, mention may be made of glycerol triesters, preferably composed predominantly (for more than 50% by weight, more preferably for more than 80% by weight) of an unsaturated $C_{18}$ fatty acid, that is to say an unsaturated fatty acid selected from the group consisting of oleic acid, linoleic acid, linolenic acid and the mixtures thereof. More preferably, whether of synthetic origin or natural origin (in the case, for example, of sunflower or rapeseed vegetable oils), the fatty acid used is composed for more than 50% by weight, more preferably still from 80% by weight, of oleic acid. Such triesters (trioleates) comprising a high content of oleic acid are well known; for example they have been described in Application WO 02/088238, as the liquid plasticizers in treads for tires.

If the liquid plasticizer used comprises a petroleum oil, the petroleum oil is preferably a non-aromatic petroleum oil. A liquid plasticizer is described as non-aromatic when it has a content of polycyclic aromatic compounds, determined with the extract in DMSO according to the IP 346 method, of less than 3% by weight, relative to the total weight of the plasticizer. Therefore, use may be made of a liquid plasticizer selected from the group consisting of MES oils, TDAE oils, naphthenic oils (of low or high viscosity, in particular which are hydrogenated or non-hydrogenated), paraffinic oils

and the mixtures thereof. Also suitable as petroleum oils are RAE oils, TRAE oils and SRAE oils or the mixtures thereof, which contain low contents of polycyclic compounds.

According to another preferred embodiment of the present invention, the plasticizing agent is devoid of the liquid plasticizer.

The first rubber composition (FC) comprises preferably greater than 20 phr, more preferably greater than 30 phr, still more preferably greater than 40 phr of the liquid plasticizer, in contrast to the second rubber composition (SC).

The second rubber composition (SC) according to the present invention according to the present invention may be based on all or a portion of the usual additives generally used in the elastomer compositions intended for the manufacture of treads for tires, such as, for example, pigments, protection agents, such as antiozone waxes, chemical antiozonants, antioxidants, antifatigue agents, reinforcing resins, such as methylene acceptors (for example phenolic novolac resin) or methylene donors (for example HMT or H3M), a crosslinking system based either on sulphur or on donors of sulphur and/or peroxide and/or bismaleimides, vulcanization accelerators, or vulcanization activators.

The second rubber composition (SC) can be also based on coupling activators when a coupling agent is used, agents for covering the reinforcing inorganic filler or generally processing aids capable, in a known way, by virtue of an improvement in the dispersion of the filler in the rubber matrix and of a lowering of the viscosity of the second rubber compositions (SC), of improving their property of processing in the raw state; these agents are, for example, hydrolysable silanes, such as alkylalkoxysilanes, polyols, polyethers, amines, or hydroxylated or hydrolysable polyorganosiloxanes.

The second rubber composition (SC) according to the present invention are manufactured in appropriate mixers using two successive preparation phases according to a general procedure well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of the second rubber composition (SC) comprises, for example and preferably, the following steps:

- incorporating in the diene elastomer(s), in a mixer, the reinforcing filler, the plasticizing agent, during a first stage ("non productive" stage) everything being kneaded thermomechanically, in one or more goes, until a maximum temperature of between 110°C and 190°C is reached;
- cooling the combined mixture to a temperature of less than 100°C;
- subsequently incorporating, during a second stage ("productive" stage), a crosslinking system;
- kneading everything up to a maximum temperature of less than 110°C.

By way of example, the first (non-productive) phase is carried out in a single thermomechanical stage during which all the necessary constituents are introduced into an appropriate mixer, such as a standard internal mixer, followed, in the second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; The combined mixture is then mixed (the second (productive) phase) for a few minutes, for example between 2 and 15 min.

The crosslinking system is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase.

The content of sulphur is preferably between 0.5 and 5.0 phr, and that of the primary accelerator is preferably between 0.5 and 8.0 phr.

Use may be made, as accelerator (primary or secondary) of any compound capable of acting as accelerator of the vulcanization of diene elastomers in the presence of sulphur, in particular accelerators of the thiazoles type and their derivatives, accelerators of thiurams types, or zinc dithiocarbamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-benzothiazolesulphenamide ("TBBS"), N-tert-butyl-2 benzothiazole-sulphenimide ("TBSI"), zinc dibenzyldithiocarbamate ("ZBEC"), Tetrabenzylthiuram disulfide ("TBZTD") and the mixtures thereof.

The second rubber composition (SC) thus obtained is subsequently calendered, for example in the form of a sheet or of a plaque, in particular for laboratory characterization, or else extruded in the form of a rubber profiled element which can be used directly the covering layer as portion(s) of the tread pattern elements (1) of the tread of the tire

according to the present invention.

The vulcanization (or curing) is carried out in a known way at a temperature generally of between 110°C and 190°C for a sufficient time which can vary, for example, between 5 and 90 min depending in particular on the curing temperature, the adopted vulcanization system and the vulcanization kinetics of the second rubber composition (SC) under consideration.

Dynamic shear modulus G*, which is subjected to an alternating maximum stress of 0.7 MPa, at a frequency of 10 Hz and at a temperature of -10°C, of the second rubber composition (SC), in the vulcanized state, is preferably more than 100 MPa, more preferably more than 150 MPa, still more preferably more than 200 MPa in order to obtain satisfactory snow traction performance.

In contrast, dynamic shear modulus G*, which is subjected to an alternating maximum stress of 0.7 MPa, at a frequency of 10 Hz and at a temperature of -10°C, of the first rubber composition (FC), in the vulcanized state, is preferably less than 20 MPa, more preferably less than 10 MPa, still more preferably less than 5 MPa.

The dynamic shear modulus G* means complex modulus G* defined as being the absolute value of a complex sum of elastic modulus G' and viscous modulus G":

[Math.1]

$$G^* = \sqrt{G'^2 + G''^2}$$

The elastic modulus (G') and the viscous modulus (G") denote dynamic properties well known to a person skilled in the art. These properties are measured on a Metravib VA4000 type viscoanalyzer on test specimens molded from unvulcanized compositions. Test specimens such as those described in the standard ASTM D 5992-96 (the version published in September 2006, initially approved in 1996), Figure X2.1 (circular embodiment) are used. The diameter "d" of the test specimen is 10 mm (so it therefore has a circular cross section of 78.5 $mm^2$), the thickness "L" of each of the portions of rubber composition is 2 mm, which gives a "d/L" ratio of 5 (unlike in the ISO to standard 2856 mentioned in the ASTM standard at paragraph X2.4 which recommends a d/L value of 2). The response of a test specimen of vulcanized rubber composition subjected to simple alternating sinusoidal shear stresses at a frequency of 10 Hz is recorded. The test specimen is shear loaded sinusoidally at 10 Hz, with an imposed stress (0.7 MPa), symmetrically about its equilibrium position. The test specimen undergoes an accommodation cycle prior to measurement. The test specimen is then shear loaded sinusoidally at 10 Hz, at 100% deformation peak-peak, at an ambient temperature. The measurements are taken as the temperature increases at a gradient of 1.5°C per minute, from a temperature $T_{min}$ below a glass transition temperature (Tg) of the material, up to a temperature $T_{max}$ which may correspond to the rubber plateau of the material. The glass transition temperature (Tg) is a temperature measured on the maximum of a ratio (G'/G") which is tan delta. The glass transition temperature (Tg) can be obtained with the measurement of the above modulus (G' and G"). Before the temperature sweep from $T_{min}$ to $T_{max}$ is begun, the test specimen is stabilized at the temperature $T_{min}$ for 20 minutes in order to have a uniform temperature within the test specimen. The result exploited is the dynamic shear modulus of elasticity (G') and the viscous shear modulus (G") at selected temperatures.

A first step in a manufacture of the tread of the tire according to the present invention is to cover the first rubber composition (FC) with the layer of the second rubber composition (SC).

For example, the first step can be done with a method described in the aforementioned application WO 2013/087878, namely by impregnating a two-dimensional fiber assembly such a fabric or non-woven, or a three-dimensional fiber assembly as a felt, previously placed in the appropriate dimensions, with the second rubber composition (SC). This impregnation can be done for example by hot calendering, by press molding or by injection under pressure.

The presence of the fiber assembly impregnated with the second rubber composition (SC), allows to obtain an excellent cohesion of the layer of the second rubber composition (SC) before vulcanization of the tire and thus assist the layer of the second rubber composition (SC) to place on the first rubber composition (FC) during molding of the tire.

Of course, means other than the fiber assembly could be used to improve the cohesion and the placement of the layer of the second rubber composition (SC) in the raw state, such as a rigid metal sheet, cellulose fiber (for instance, paper, cardboard) or another polymer.

Of course, if such a fiber assembly, strip or other means, is used to help the laying of the second rubber composition (SC) to place on the first rubber composition (FC) during the manufacture of the tire according to the present invention, the second rubber composition (SC) can comprise the fiber assembly, the strip or the other means unless the fiber assembly, the strip or the other means is extracted before the curing of the tire.

Preferably, the fibers used are long fibers having a longest dimension of greater than 30 mm, more preferably of greater than 50 mm.

Any type of fibers, preferably fibers selected from the group consisting of textile fiber, mineral fiber and the mixtures thereof, can be used to the layer of the second rubber composition (SC) with sufficient tensile rigidity to facilitate

the placement of layer of the second rubber composition during molding of the tire.

The textile fiber may be selected from the group consisting of natural origin fibers, synthetic fibers and the mixtures thereof. The natural origin fibers may be made an organic material selected from the group consisting of silk, cotton, bamboo, cellulose, wool and the mixtures thereof, preferably cotton, cellulose, wood and the mixtures thereof. The synthetic fibers may be made of a synthetic material selected from the group consisting of polyester, polyamide, carbon, aramid, polyethylene, polypropylene, polyacrylonitrile, polyimide, polysulfone, polyether sulfone, polyurethane, polyvinyl alcohol and the mixtures thereof.

The mineral fiber may be selected from the group consisting of glass fibers, basalt fiber and the mixtures thereof.

Then, one way of obtaining such a tread pattern is for example to cover the entirety of a green form of a tread comprising the first rubber composition (FC) with the layer of the second rubber composition (SC) of suitable thickness before molding the tread and the cut-outs. After molding, the second rubber composition (SC) on the contact surface (2) can be left in place or alternatively eliminated by a mechanical means (notably by grinding).

Another way of industrially producing a tread of a tire according to the present invention may consist in applying, to the unvulcanized green form of the tire provided with a tread made of the first rubber composition (FC), thin strips of the second rubber composition (SC), as described in patent EP 0510550 (it is possible for the thin strips to be applied to the tread in the circumferential and/or axial direction(s)). Another way may consist in producing the tread by coextruding two (or more) compounds when the tread is extruded. It is still possible to operate as described in Figures 5-6 and paragraph IV-B of WO2013/087878.

After vulcanization of the tire of the present invention, the specific layer of the second rubber composition (SC) described above has the advantage of providing a very high stiffness at a low temperature (below 0 ° C) to the edges (23, 24, 25, 26) formed by the intersection of the contact surfaces (2) and the high rigidity lateral faces (13, 14, 15, 16), which is particularly favorable behavior of the tire on snowy ground, while giving the tire, thanks to the presence of the specific second rubber composition capable of improving wet grip performance of the tire at not only high, but also low wet temperatures.

According to a preferred embodiment of the invention, the layer of the second rubber composition (SC) has a thickness (E1) which is more than 0.1mm, preferably more than 0.2 mm in order to get excellent grip on snow ground. More preferably, the thickness is between 0.2 and 4.0 mm, still more preferably between 0.3 and 1.0 mm in order to maintain an excellent behavior on snowy ground while at the same time limiting the extent to which grip on icy ground is penalized.

The present invention is further illustrated by the following non-limiting examples.

**Examples**

In the following tests, four compositions (identified as C-0 (a reference), C-1 (a comparative example), C-2 (example not according to the present invention) and C-3 (example according to the present invention)) as the second rubber composition are compared, the five compositions are based on a diene elastomer (SBR or butyl rubber), and they are reinforced with a blend of silica (as a reinforcing inorganic filler) and carbon black with a varying plasticizing agent comprising a hydrocarbon resin. Formulations of the four compositions are given at Table 1 with the content of the various products expressed in phr.

The reinforcing filler, its associated coupling agent, the plasticizing agent, the elastomer and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products.

Table 2 shows each glass transition temperature of the four compositions on the max tan delta when subjected to an alternating maximum stress of 0.7 MPa at a frequency of 10 Hz, measured on the Metravib VA4000 type viscoanalyzer in accordance with ASTMD5992-96.

The properties of test specimens (T-0 to T-3) comprising the rubber compositions (C-0 to C-3 as the second rubber compositions (SC)), obtained from dynamic friction coefficient measurements on arbitrary suitable wet conditions described in detail below are given in Table 3, a value greater than that of the reference (T-0), arbitrarily set at 100, indicating an improved result, i.e. an aptitude for a shorter braking distance.

Each test specimen (30) used is shown in the appended Figure 3 (view from above) and 4 (view from the side). Each test specimen (30) comprises four blocks (31) which have a length (L1: 27mm) on a longitudinal direction, a width (L2: 25mm) on a transversal direction, and a height (H: 9mm) on a normal direction, of each test specimen (30). Each block (31) is delimited a groove (3) longitudinally extending and another groove (4) transversally extending. Each groove (3, 4) has a width of 6 mm on the transversal or longitudinal direction. Each block (31) comprises five portions (32) intervally delimited by four sipes (33) transversally extending. Each sipe (33) is open to both sides of each block (31), and has a 0.6 mm of a width on the longitudinal direction. Each test specimen (30) comprises the blocks (31) which comprise a conventional rubber composition (as the first rubber composition (FC)) covered with layers of each of the five rubber compositions (C-0 to C-4 as the second rubber compositions (SC)) on lateral faces that have an orientation that is perpendicular to the longitudinal direction. The layers applied to the first rubber composition (FC) as described in patent EP 050550 have a thickness (E1: 0.6 mm) on the longitudinal direction and a height ($H_R$: 9 mm) on the normal direction. Each test specimen (30) was produced by molding, then crosslinking of a rectangular rubbery support (34) which has a length (L: 60 mm) on the longitudinal direction, a width (l: 56 mm) on the transversal direction, and a thickness (2mm) on the normal direction. After closing the mold, the latter was placed in a press with heated platens at a temperature (typically 160°C), and for the time that was necessary for the crosslinking of these rubber compositions (typically several tens of minutes), at a pressure of 16 bar.

The measurements of the dynamic friction coefficient on wet (wet $\mu$ laboratory) were carried out according to a method identical to that described by L. Busse, A. Le Gal, and M. Kuppel (Modelling of Dry and Wet Friction of Silica Filled Elastomers on Self-Affine Road Surfaces, Elastomere Friction, 2010, 51, p. 8). The ground used for carrying out these measurements was a core removed from an actual road surface made of asphalt concrete of BBTM (very thin asphalt concrete) type (standard NF P 98-137). In order to prevent the phenomena of dewetting and the appearance of secondary grip forces between the ground and the material, the ground + test specimen system was immersed in a 5% aqueous solution of a surfactant (Sinnozon - CAS number: 25155-30-0). Each temperature of the aqueous solution was regulated using a thermostatic bath. Each test specimen (30) was subjected to a sliding movement in translation parallel to the plane of the ground. The sliding velocity (SV) was set for example at 5 m/sec. The applied normal stress ($\sigma_n$) was for example 300 kPa. The tangential stress ($\sigma_t$) opposed to the movement of each test specimen (30) over the ground was measured continuously. The ratio between the tangential stress ($\sigma_t$) and the normal stress ($\sigma_n$) gives the dynamic friction coefficient ($\mu$). The values indicated in the examples are the dynamic friction coefficient values measured at each of two aqueous solution temperatures (8°C: low wet temperature condition, 23°C: high wet temperature condition), obtained at steady state after stabilization of the value of the tangential stress ($\sigma_t$). In the measurements, each test specimen (30) was moved on the longitudinal direction of each test specimen (30).

As an examination of the results in Table 3, the test specimens T-2 (not according to the present invention) and T-3 (according to the present invention), compared with the reference T-0 and the comparative example T-1, exhibit markedly improved dynamic wet friction coefficients at the low wet temperature. Moreover, the test specimens T-2 and T-3, reveals higher dynamic wet friction coefficients than that of the reference T-0 at the high wet temperature.

In conclusion, the tire comprising the tread which comprises the tread pattern elements respectively comprising the first rubber composition (FC) covered on the lateral face(s) with the specific second rubber composition (SC) according to the present invention makes possible an improvement of grip on wet on low wet temperature condition(s) as well as high one(s).

[Table 1]

| | Reference | Comparative example | Examples | |
|---|---|---|---|---|
| | C-0 | C-1 | C-2 | C-3 |
| SBR (1) | 100 | 100 | | |
| Butyl rubber (2) | | | 100 | 100 |
| Silica (3) | 60 | 60 | 125 | 125 |
| Coupling agent (4) | 6.4 | 6.4 | 10 | 10 |
| Carbon black (5) | 4 | 4 | 4 | 4 |
| Hydrocarbon resin (6) | 25 | 50 | 55 | 55 |
| Liquid plasticizer 1 (7) | 25 | | | |
| Liquid plasticizer 2 (8) | | | 10 | |
| Stearic acid | 1 | 1 | 1 | 1 |

(continued)

| | Reference | Comparative example | Examples | |
|---|---|---|---|---|
| | C-0 | C-1 | C-2 | C-3 |
| Anti-ozone wax | 1.5 | 1.5 | 1.5 | 1.5 |
| DPG (9) | 2.5 | 2.5 | 2.5 | 2.5 |
| ZnO | 1.5 | 1.5 | 1.5 | 1.5 |
| Accelerator (10) | 1 | 1 | 1.0 | 1.0 |
| Sulphur | 1 | 1 | 1 | 1 |

(1) Butadiene/Styrene copolymers with 44% of styrene units and 41% of 1,2-polybutadiene part ($Tg_{DSC}$ = -12°C);
(2) Brominated butyl rubber (BIIR "EB2222" from Exxon);
(3) Silica ("Zeosil1165MP" from Rhodia, CTAB, BET: about 160 $m^2/g$);
(4) Coupling agent TESPT ("Si69" from Evonik);
(5) ASTM grade N234 (from Cabot);
(6) Cycloaliphatic hydrocarbon resins (ESCOREZ5600, Exxon mobil, $Tg_{DSC}$=52°C);
(7) TDAE oil ("Vivatec 500" from the Hansen & Rosenthal company);
(8) MES oil ("Catenex SNR" from Shell);
(9) Diphenylguanidine ("Perkacit DPG" from Flexsys);
(10) 2-mercaptobenzothiazyl disulphide ("Perkacit MBTS" from Flexsys).

[Table 2]

| | Reference | Comparative example | Examples | |
|---|---|---|---|---|
| | C-0 | C-1 | C-2 | C-3 |
| Tg[°C](11) | 6.5 | 20 | 15 | 18 |

(11) Glass transition temperature on the max tan delta when subjected to an alternating maximum stress of 0.7 MPa at a frequency of 10 Hz, measured on the Metravib VA4000 type viscoanalyzer in accordance with ASTMD5992-96.

[Table 3]

| | Reference | Comparative example | Examples | |
|---|---|---|---|---|
| | T-0 | T-1 | T-2 | T-3 |
| Wet $\mu$ laboratory at low wet temperature (12) | 100 | 100 | 110 | 110 |
| Wet $\mu$ laboratory at high wet temperature (13) | 100 | 110 | 110 | 115 |

(12) Aqueous solution temperature: 8 °C;
(13) Aqueous solution temperature: 23 °C.

## Claims

**1.** A tire comprising a tread which comprises a plurality of tread pattern elements (1) delimited by cut-outs (3, 4);
the tread pattern elements (1) respectively comprising at least one lateral face (13, 14, 15, 16) and a contact surface (2) intended to come into contact with the ground during rolling;
the tread pattern elements (1) respectively comprising a first rubber composition (FC) at least partially covered on at least one of the lateral face(s) with a layer of a second rubber composition (SC) which is different from the first rubber composition (FC), the tire, being **characterized in that** the second rubber composition (SC) is based on:

- more than 50 phr and up to 100 phr of a butyl rubber;
- no the other diene elastomer or less than 50 phr of another diene elastomer which is different from the butyl rubber;

- a reinforcing filler comprising more than 60 phr of a reinforcing inorganic filler; and
- a plasticizing agent comprising more than 25 phr of a hydrocarbon resin having a glass transition temperature of more than 20°C, and comprising no liquid plasticizer or comprising at most 5 phr of a liquid plasticizer, preferably devoid of the liquid plasticizer.

**2.** The tire according to Claim 1, wherein the second rubber composition (SC) is based on 70 to 100 phr of the butyl rubber.

**3.** The tire according to Claim 1 or Claim 2, wherein the butyl rubber is a halogenated butyl rubber.

**4.** The tire according to any one of Claims 1 to 3, wherein the other diene elastomer is selected from the group consisting of natural rubber, synthetic polyisoprenes, polybutadienes, butadiene copolymers, isoprene copolymers and the mixtures thereof.

**5.** The tire according to Claim 4, wherein the other diene elastomer is selected from the group consisting of polybutadienes, butadiene copolymers, isoprene copolymers and the mixtures thereof.

**6.** The tire according to Claim 4, wherein the other diene elastomer is selected from the group consisting of natural rubber, synthetic polyisoprenes and the mixtures thereof.

**7.** The tire according to any one of Claims 1 to 6, wherein the reinforcing filler comprises between 80 and 160 phr of the reinforcing inorganic filler.

**8.** The tire according to any one of Claims 1 to 7, wherein the reinforcing inorganic filler comprises from 50 to 100% of silica by weight of the reinforcing inorganic filler.

**9.** The tire according to Claim 8, wherein the reinforcing inorganic filler comprises 100% of silica by weight of the reinforcing inorganic filler.

**10.** The tire according to any one of Claims 1 to 9, wherein the reinforcing filler comprises less than 20 phr of carbon black.

**11.** The tire according to any one of Claims 1 to 10, wherein the second rubber composition (SC) is based on more than 40 phr of the plasticizing agent.

**12.** The tire according to Claims 11, wherein the second rubber composition (SC) is based on more than 50 phr of the plasticizing agent.

**13.** The tire according to any one of Claims 1 to 12, wherein the plasticizing agent comprises between 25 and 100 phr of the hydrocarbon resin.

**14.** The tire according to any one of Claims 1 to 13, wherein the hydrocarbon resin has the glass transition temperature of more than 30°C.

**15.** The tire according to any one of Claims 1 to 14, wherein the hydrocarbon resin is selected from the group consisting of cyclopentadiene homopolymer or copolymer resins, dicyclopentadiene homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins, and the mixtures thereof.

## Patentansprüche

**1.** Reifen, umfassend eine Lauffläche, die eine Vielzahl von Laufflächen-Musterelementen (1) umfasst, die durch Ausschnitte (3, 4) begrenzt sind;
Laufflächen-Musterelemente (1), jeweils umfassend wenigstens eine laterale Seite (13, 14, 15, 16) und eine Kontaktfläche (2), die dazu bestimmt ist, während des Rollens mit dem Boden in Kontakt zu kommen;
Laufflächenelement (1), jeweils umfassend eine erste Gummiverbindung (FC), die wenigstens teilweise auf wenigstens einer der lateralen Seite(en) mit einer Schicht aus einer zweiten Gummizusammensetzung (SC) abgedeckt ist, die sich von der ersten Gummizusammensetzung (FC) unterscheidet, wobei der Reifen **dadurch gekennzeich-**

**net ist, dass** die zweite Gummizusammensetzung (SC) basiert auf:

- mehr als 50 phr und bis zu 100 phr eines Butylgummis;
- nicht dem anderem Dienelastomer oder weniger als 50 phr eines anderen Dienelastomers, das von dem Butylgummi unterschiedlich ist;
- einem Verstärkungsfüllstoff, umfassend mehr als 60 phr eines anorganischen Verstärkungsfüllstoffs; und
- einem Weichmacher, umfassend mehr als 25 phr eines Kohlenwasserstoff-Harzes mit einer Glas-Übergangstemperatur von mehr als 20°C und umfassend keinen flüssigen Weichmacher oder umfassend maximal 5 phr eines flüssigen Weichmachers, bevorzugt frei von dem flüssigen Weichmacher.

**2.** Reifen gemäß Anspruch 1, wobei die zweite Gummizusammensetzung (SC) auf 70 bis 100 phr des Butylgummis basiert.

**3.** Reifen gemäß Anspruch 1 oder Anspruch 2, wobei das Butylgummi ein halogeniertes Butylgummi ist.

**4.** Reifen gemäß irgendeinem der Ansprüche 1 bis 3, wobei das andere Dienelastomer aus der Gruppe ausgewählt ist, bestehend aus Naturgummi, synthetischen Polyisoprenen, Polybutadienen, Butadien-Kopolymeren, Isopren-Kopolymeren und den Mischungen davon.

**5.** Reifen gemäß Anspruch 4, wobei das andere Dienelastomer aus der Gruppe ausgewählt ist, bestehend aus Polybutadienen, Butadien-Kopolymeren, Isopren-Kopolymeren und den Mischungen davon.

**6.** Reifen gemäß Anspruch 4, wobei das andere Dienelastomer aus der Gruppe ausgewählt ist, bestehend aus Naturgummi, synthetischen Polyisoprenen und den Mischungen davon.

**7.** Reifen gemäß irgendeinem der Ansprüche 1 bis 6, wobei der Verstärkungsfüllstoff zwischen 80 und 160 phr des anorganischen Verstärkungsfüllstoffs umfasst.

**8.** Reifen gemäß irgendeinem der Ansprüche 1 bis 7, wobei der anorganische Verstärkungsfüllstoff 50 % bis 100 Gew.-% Kieselerde des anorganischen Verstärkungsfüllstoffs umfasst.

**9.** Reifen gemäß Anspruch 8, wobei der anorganische Verstärkungsfüllstoff 100 Gew.-% Kieselerde des anorganischen Verstärkungsfüllstoffs umfasst.

**10.** Reifen gemäß irgendeinem der Ansprüche 1 bis 9, wobei der Verstärkungsfüllstoff weniger als 20 phr des Kohlenstoffschwarzes umfasst.

**11.** Reifen gemäß irgendeinem der Ansprüche 1 bis 10, wobei die zweite Gummizusammensetzung (SC) auf mehr als 40 phr des Weichmachers basiert.

**12.** Reifen gemäß Anspruch 11, wobei die zweite Gummizusammensetzung (SC) auf mehr als 50 phr des Weichmachers basiert.

**13.** Reifen gemäß irgendeinem der Ansprüche 1 bis 12, wobei der Weichmacher zwischen 25 und 100 phr des Kohlenwasserstoff-Harzes umfasst.

**14.** Reifen gemäß irgendeinem der Ansprüche 1 bis 13, wobei das Kohlenwasserstoff-Harz eine Glas-Übergangstemperatur von mehr als 30°C aufweist.

**15.** Reifen gemäß irgendeinem der Ansprüche 1 bis 14, wobei das Kohlenwasserstoff-Harz aus der Gruppe ausgewählt ist, bestehend aus Cyclopentadien-Homopolymer- oder Kopolymer-Harzen, Diclyclopentadien-Homopolymer- oder Kopolymer-Harzen, Terpen-Homopolymer- oder Kopolymer-Harzen, $C_5$-Fraktionshomopolyer- oder Kopolymerharzen, $C_9$-Fraktionshomopolymer- oder Kopolymerharzen, Alpha-Methylstyrol-Homopolymer- oder Kopolymerharzen und den Mischungen davon.

## Revendications

1. Pneumatique comprenant une bande de roulement qui comprend une pluralité d'éléments de motif de bande de roulement (1) délimités par des découpes (3, 4) ; les éléments de motif de bande de roulement (1) comprenant respectivement au moins une face latérale (13, 14, 15, 16) et une surface de contact (2) destinée à entrer en contact avec le sol durant le roulement ; les éléments de motif de bande de roulement (1) comprenant respectivement une première composition de caoutchouc (FC) au moins partiellement recouverte sur au moins une de la(des) face(s) latérale(s) avec une couche d'une seconde composition de caoutchouc (SC) qui est différente de la première composition de caoutchouc (FC), le pneumatique, étant **caractérisé en ce que** la seconde composition de caoutchouc (SC) est basée sur :

   - plus de 50 pce et jusqu'à 100 pce d'un caoutchouc butylique ;
   - pas d'autre élastomère de diène ou moins de 50 pce d'un autre élastomère de diène qui est différent du caoutchouc butylique ;
   - un agent de remplissage de renforcement comprenant plus de 60 pce d'un agent de remplissage inorganique de renforcement ; et
   - un agent plastifiant comprenant plus de 25 pce d'une résine d'hydrocarbures ayant une température de transition vitreuse de plus de 20 °C, et ne comprenant pas de plastifiant liquide ou comprenant au maximum 5 pce d'un plastifiant liquide, de préférence dépourvu du plastifiant liquide.

2. Pneumatique selon la revendication 1, dans lequel la seconde composition caoutchouteuse (SC) est basée sur 70 à 100 pce du caoutchouc butylique.

3. Pneumatique selon la revendication 1 ou la revendication 2, dans lequel le caoutchouc butylique est un caoutchouc butylique halogéné.

4. Pneumatique selon l'une quelconque des revendications 1 à 3, dans lequel l'autre élastomère de diène est sélectionné à partir du groupe constitué de caoutchouc naturel, de polyisoprènes synthétiques, de polybutadiènes, de copolymères de butadiène, de copolymères d'isoprène et des mélanges de ceux-ci.

5. Pneumatique selon la revendication 4, dans lequel l'autre élastomère de diène est sélectionné à partir du groupe constitué de polybutadiènes, de copolymères de butadiène, de copolymères d'isoprène et des mélanges de ceux-ci.

6. Pneumatique selon la revendication 4, dans lequel l'autre élastomère de diène est sélectionné à partir du groupe constitué de caoutchouc naturel, de polyisoprènes synthétiques et des mélanges de ceux-ci.

7. Pneumatique selon l'une quelconque des revendications 1 à 6, dans lequel l'agent de remplissage de renforcement comprend entre 80 et 160 pce de l'agent de remplissage inorganique de renforcement.

8. Pneumatique selon l'une quelconque des revendications 1 à 7, dans lequel l'agent de remplissage de renforcement comprend de 50 à 100 % de silice en poids de l'agent de remplissage inorganique de renforcement.

9. Pneumatique selon la revendication 8, dans lequel l'agent de remplissage inorganique de renforcement comprend 100 % de silice en poids de l'agent de remplissage inorganique de renforcement.

10. Pneumatique selon l'une quelconque des revendications 1 à 9, dans lequel l'agent de remplissage de renforcement comprend moins de 20 pce de noir de carbone.

11. Pneumatique selon l'une quelconque des revendications 1 à 10, dans lequel la seconde composition de caoutchouc (SC) est basée sur plus de 40 pce de l'agent plastifiant.

12. Pneumatique selon la revendication 11, dans lequel la seconde composition de caoutchouc (SC) est basée sur plus de 50 pce de l'agent plastifiant.

13. Pneumatique selon l'une quelconque des revendications 1 à 12, dans lequel l'agent plastifiant comprend entre 25 et 100 pce de la résine d'hydrocarbures.

14. Pneumatique selon l'une quelconque des revendications 1 à 13, dans lequel la résine d'hydrocarbures a la température de transition vitreuse de plus de 30 °C.

**15.** Pneumatique selon l'une quelconque des revendications 1 à 14, dans lequel la résine d'hydrocarbures est sélectionnée à partir du groupe constitué de résines d'homopolymère ou de copolymère de cyclopentadiène, de résines d'homopolymère ou de copolymère de dicyclopentadiène, de résines d'homopolymère ou de copolymère de terpène, de résines d'homopolymère ou de copolymère de fraction C5, de résines d'homopolymère ou de copolymère de fraction C9, de résines d'homopolymère ou de copolymère de styrène alpha-méthyle, et les mélanges de ceux-ci.

[Fig. 1]

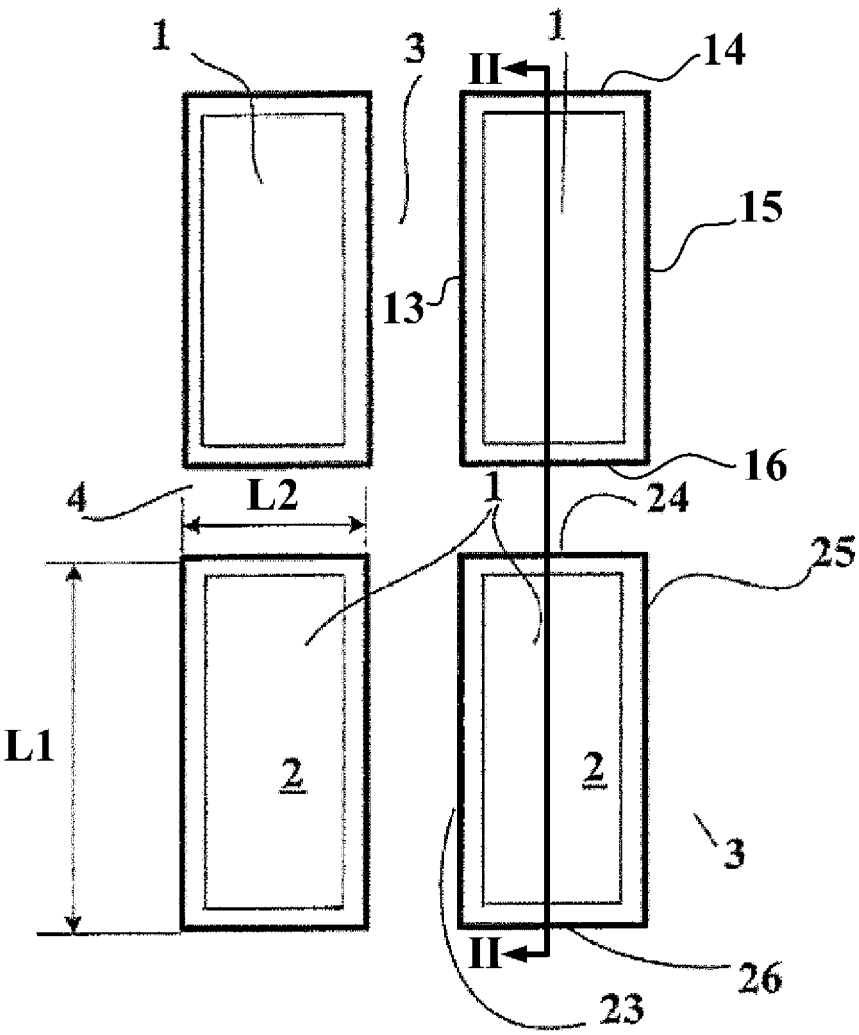


[Fig. 2]

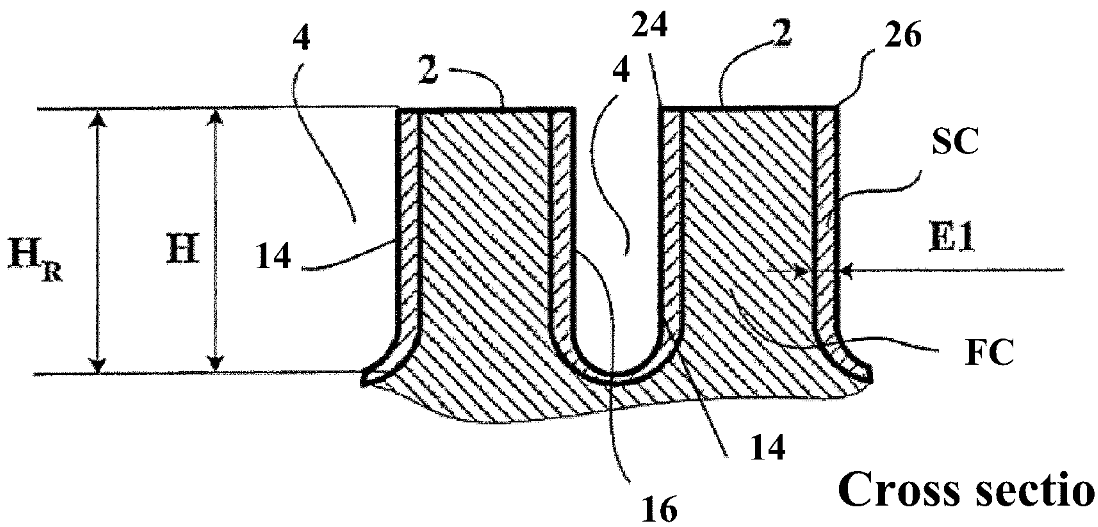


Cross section II-II

[Fig. 3]

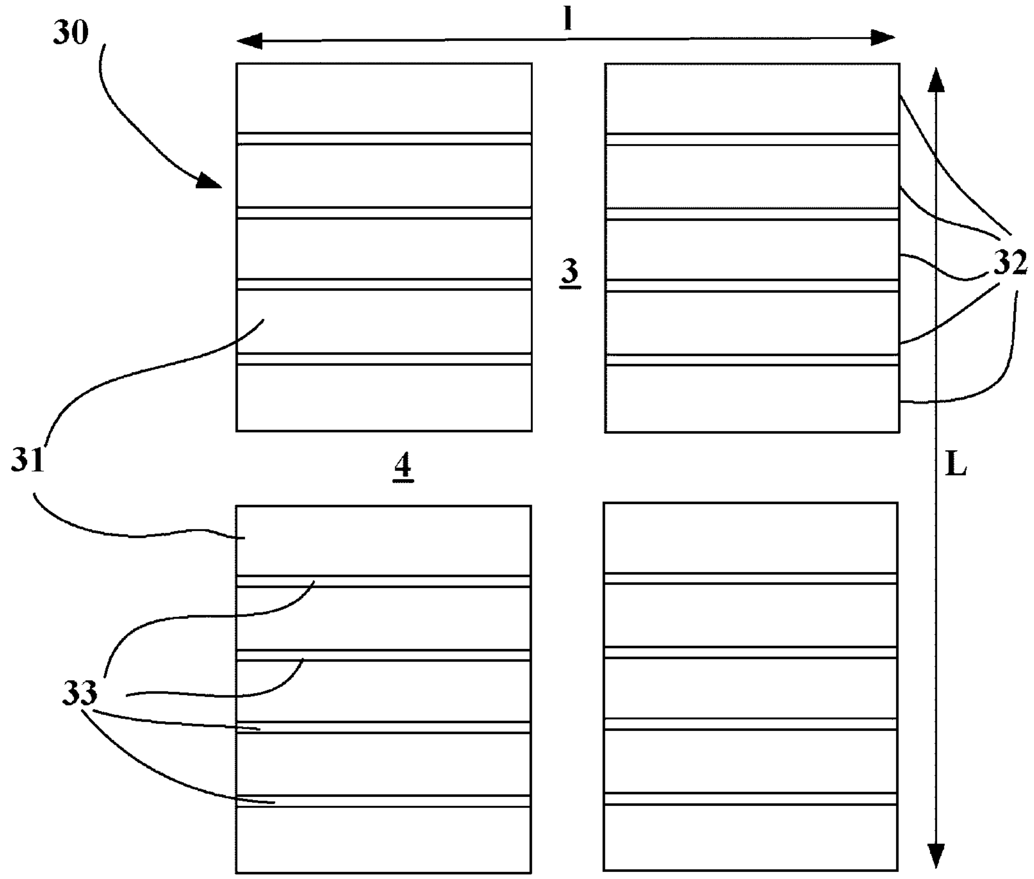


[Fig. 4]

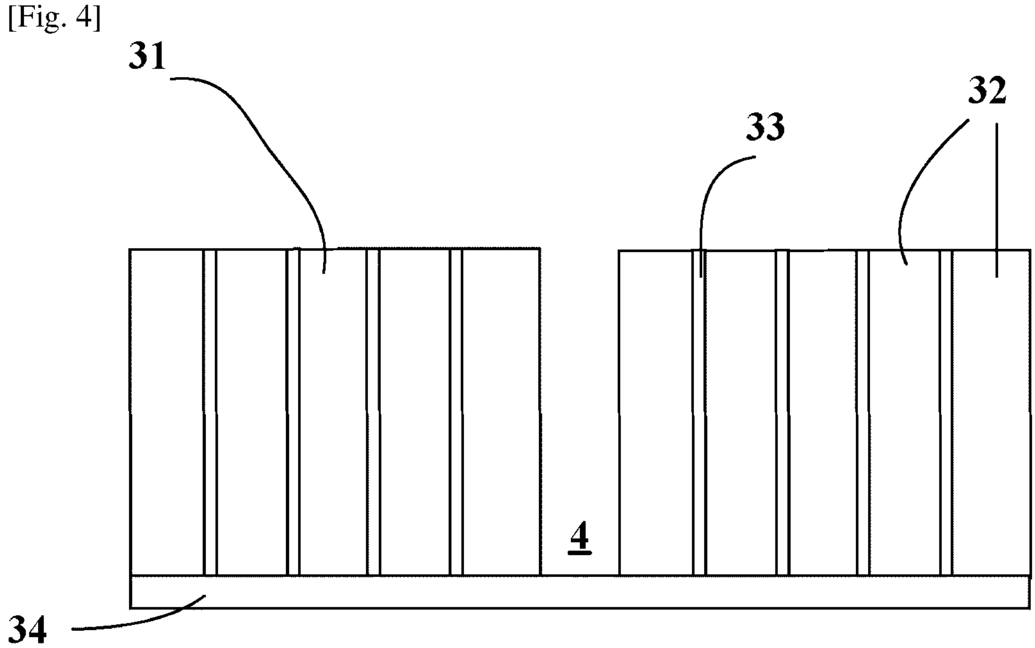

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013087878 A
- WO 2012069565 A
- WO 2015185394 A
- WO 2015185395 A
- WO 0316387 A
- WO 9637547 A
- WO 9928380 A
- WO 03002648 A
- WO 03002649 A
- WO 2004033548 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2008055986 A
- WO 2010072685 A
- WO 2005087859 A
- WO 2006061064 A
- WO 2007017060 A
- WO 02088238 A
- EP 0510550 A
- EP 050550 A


### Non-patent literature cited in the description


- **L. BUSSE ; A. LE GAL ; M. KUPPEL.** Modelling of Dry and Wet Friction of Silica Filled Elastomers on Self-Affine Road Surfaces. *Elastomere Friction,* 2010, vol. 51, 8